# FASCICULE DE BREVET EUROPEEN

(11) **EP 0 818 033 B1**
(45) Date de publication et mention de la délivrance du brevet: **19.05.1999**
(21) Numéro de dépôt: 96941104.0
(22) Date de dépôt: 03.12.1996
(51) Int. Cl.: G09F 9/33

(54) **DISPOSITIF DE VISUALISATION POUR AUTOMATE PROGRAMMABLE**
ANZEIGEVORRICHTUNG FÜR PROGRAMMIERBAREN AUTOMATEN
DISPLAY DEVICE FOR A PROGRAMMABLE CONTROLLER

(30) Priorité: 05.12.1995 FR 9514743
(43) Date de publication de la demande: 14.01.1998
(73) Titulaire: Schneider Automation, 06560 Valbonne (FR)
(72) Inventeur: CARPINE, Alain, F-06560 Valbonne (FR); MEURLAY, Alain, F-06510 Carros (FR); CHABERT, Jean-Marie, F-06560 Valbonne (FR); GODICKE, Antonia, F-06560 Valbonne (FR); GOSSEAUME, Christian, F-06410 Biot (FR)
(74) Mandataire: Saint Martin, René
(86) Numéro de dépôt international: FR9601922
(87) Numéro de publication internationale: WO9721204

(56) Documents cités:
- EP-A- 0 367 851
- DE-A- 3 733 300
- DE-U- 9 300 637
- FR-A- 2 651 356
- IBM TECHNICAL DISCLOSURE BULLETIN, vol. 37, no. 01, Janvier 1994, ARMONK, NY, US, page 251 XP000428764 ANON: "Large Area Condition Indicator light"

## Description

La présente invention concerne un dispositif de visualisation monté sur la face avant d'un automate équipé de modules d'entrées-sorties.

Les automates actuels disposent, sur la face avant, de voyants signalant notamment l'exécution du programme, un défaut du processeur, un défaut de mémoire, un défaut des entrées/sorties.

Les automates programmables destinés à traiter de nombreuses entrées-sorties ont une structure modulaire basée sur un bac ou plusieurs bacs, reliés entre eux, qui contiennent des coupleurs ou modules. Le rack principal contient l'unité centrale et des modules ou coupleurs. Chaque coupleur est connecté, via des voies physiques d'entrée ou de sortie, à la partie opérative (capteurs, cationneurs,..). Les coupleurs se rangent en plusieurs catégories: les coupleurs simples tels que les coupleurs TOR (entrées tout ou rien) et les coupleurs intelligents qui réalisent un traitement des signaux qu'il reçoivent ou émettent.

En général l'état des entrées-sorties d'un coupleur s'affiche sur la face avant de ce coupleur. Cette technologie ne permet pas d'avoir une vue d'ensemble de l'état des entrées-sorties.

L'invention a pour but de fournir un bloc de visualisation se logeant sur la face avant du bac de l'automate et destiné à visualiser, de manière centralisée, l'état des entrées-sorties de plusieurs modules. Ce bloc permet de réaliser un dialogue opérateur et d'effectuer des commandes par l'intermédiaire de boutons-poussoirs et cela de manière centralisée. Il est piloté à distance par une liaison série et alimenté à partir de la carte mère de l'automate et peut donc être déporté. L'utilisation d'un circuit intégré spécifique (ASIC) dans le bloc offre différentes possibilités d'affichage. II est possible d'afficher l'état des voies, l'état des défauts des voies, l'état du module ou coupleur tant pour le rack de base que les extensions, d'afficher en hexadécimal d'autres informations ((heure, étape Grafcet, mots, etc.) ou encore d'afficher des informations par des afficheurs à 7 segments. Le bloc d'affichage est compact.

Le dispositif de visualisation selon l'invention est caractérisé par le fait qu'il est constitué par une matrice de diodes pilotée par un circuit intégré de contrôle de visualisation relié par une liaison série au processeur numérique-booléen de l'automate.

Selon une caractéristique de l'invention, la matrice de diodes est subdivisée en plusieurs zones de sous-matrices de diodes pilotées par le circuit de contrôle de visualisation qui reçoit du processeur numérique-booléen, via la liaison série, une trame composée d'un adressage spécifique à une zone, cet adressage étant associé aux données représentatives des entrées-sorties.

Selon une autre caractéristqiue de l'invention, le dispositif comporte au moins un bouton de commande relié à une entrée du circuit de contrôle de visualisation.

L'invention va maintenant être décrite avec plus de détail en se référant à un mode de réalisation donné à titre d'exemple et représenté par les dessins annexés sur lesquels :
- la figure 1 représente en perspective un automate programmable équipé d'un dispositif de visualisation selon l'invention;
- la figure 2 est un schéma fonctionnel du circuit électronique du dispositif;
- la figure 3 est un chronogramme de la liaison série du dispositif;
- la figure 4 est une vue en perpective des différents composants du dispositif;
- la figure 5 est un schéma de la carte électronique équipant le dispositif;
- la figure 6 est un schéma de l'étiquette montée dans le dispositif.

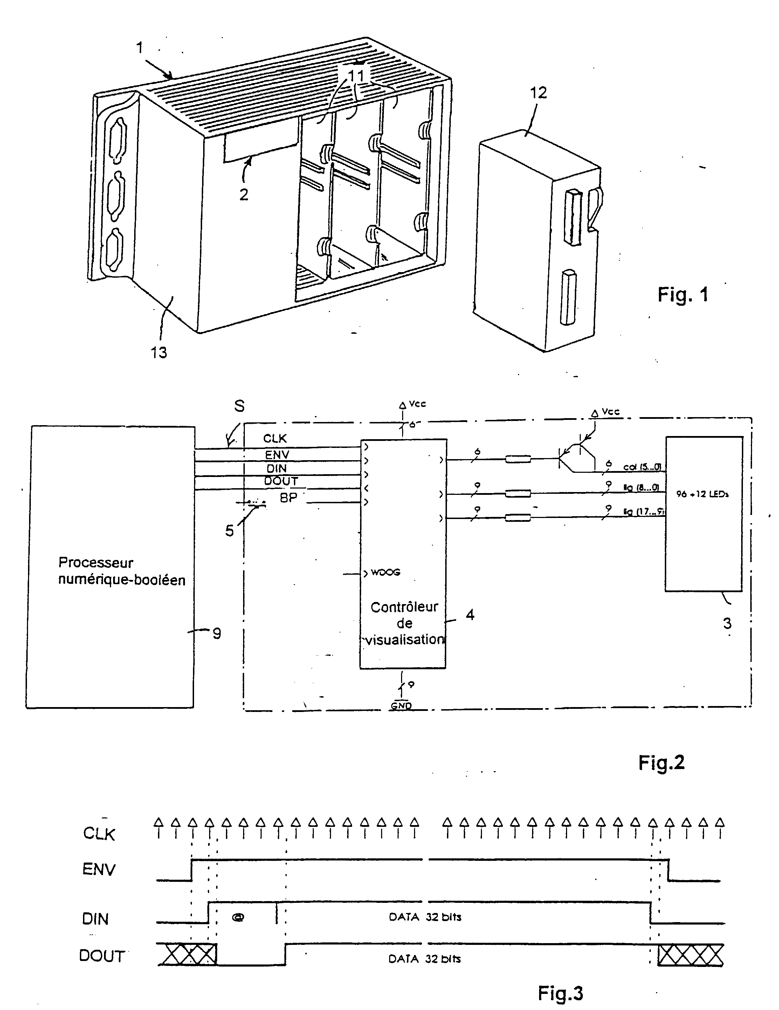

En se référant à la figure 1, l'automate programmable équipé du dispositif selon l'invention comprend un bac 1 moulé en matière isolante qui forme des compartiments modulaires 11 dans lesquels peuvent se loger des modules fonctionnels ou coupleurs d'interface tel que 12. Le bac 1 comprend également, à gauche des compartiments 11, un compartiment 13 pour une unité centrale et une alimentation.

L'automate présente, sur sa face avant, un bloc de visualisation 2 dont les particularités vont être expliquées ci-après.

La visualisation des entrées-sorties est réalisée par une matrice 3 de composants de visualisation 35 qui sont ici de type diodes électroluminescentes (notées LEDs en abrégé). Cette matrice 3 est pilotée par un circuit intégré de contrôle de visualisation 4 constitué par un circuit ASIC.

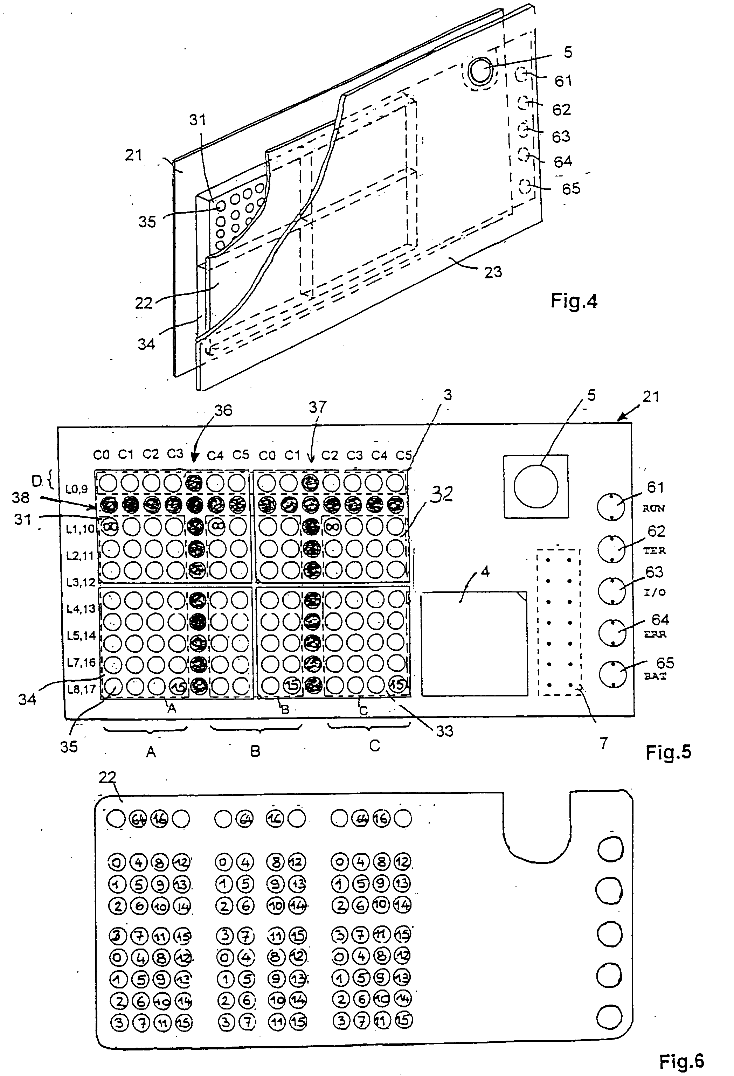

En se référant à la figure 4, la matrice 3 est constituée d'un ensemble (matrice) de diodes 35 disposées sur quatre pavés de diodes 31, 32, 33, 34 contenant chacun un ensemble (matrice) de diodes 35, ces pavés étant disposés de manière jointive. La matrice de diodes forme plusieurs zones ou sous-matrices A, B, C qui regroupent chacune les diodes de signalisation concermant les entrées-sorties d'un même coupleur. Le dispositif peut afficher les entrées/sorties des trois zones A, B, C à la fois. Une quatrième zone repérée D est constituée d'une rangée de diodes qui servent chacune à afficher des informations de service.

On note que les contours des zones A, B, C de diodes ne correspondent pas aux contours des pavés 31, 32, 33, 34.

La matrice de diodes 3 comporte au moins une ligne 38 et deux colonnes 36, 37 de diodes qui ne sont pas connectées au circuit de contrôle de visualisation 4 et restent donc inactives et qui délimitent les zones de diodes A, B, C, D servant à visualiser les états d'entrées-sorties.

Le circuit 4 de contrôle de visualisation est relié par une liaison série S au processeur numérique-booléen 9 de l'automate. Cette liaison série se compose de 4 signaux CLK, ENV, DIN, DOUT. En se référant à la figure 3, le circuit 4 de contrôle de visualisation reçoit du processeur numérique-booléen 9, via la liaison série S sur la ligne DIN, une trame composée d'un adressage spécifique à une zone telle que A, B, C, cet adressage étant associé à des bits représentatifs des entrées-sorties d'un module.

Le dispositif comprend un bouton de commande 5 qui est relié à une entrée du circuit de contrôle de visualisation 4.

En se référant à la figure 4, le dispositif comporte, à l'arrière, une carte électronique de base 21 portant la matrice de diodes 3 et le circuit 4 de contrôle de visualisation. Cette carte 21 porte des diodes électroluminescentes discrètes 61, 62, 63, 64, 65 qui sont pilotées directement par le processeur numérique-booléen 9 et servent à donner des indications sur l'automate. Cette carte est reliée par le connecteur 7 au processeur numérique-booléen 9. Elle porte le bouton 5.

La carte 21 est placée derrière une plaque-étiquette 22 en matière plastique portant les numéros des entrées-sorties groupés en zones correspondant aux zones A, B, C de la matrice de diodes 3. Chaque numéro est imprimé sur une plage circulaire transparente se découpant sur un fond opaque.

La plaque-étiquette 22 est elle-même placée derrière un capot extérieur 23 en matière plastique transparente qui affleure la face avant de l'automate. L'extrémité du bouton 5 traverse ce capot. Le bouton 5 est accessible à travers le capot.

Le fonctionnement du dispositif va maintenant être expliqué.

Le processeur numérique-booléen 9 qui pilote l'automate programmable communique avec une interface du circuit 4 de contrôle de visualisation, via la liaison série de 4 signaux CLK, ENV, DIN, DOUT. En se référant à la figure 3, l'interface du circuit 4 reçoit du processeur 9, le signal d'horloge CLK, la trame des bits d'adresse @ et de bits de données sur DIN et le signal ENV qui est une enveloppe de la trame transmise. Les bits de données de la trame DIN représentent les entrées-sorties d'un module et le circuit 4 de contrôle de visualisation ,après traitement, va envoyer les signaux de commande aux diodes de manière à en allumer certaines. Ces bits de données sont mémorisés dans le circuit 4.

L'adresse indiquée dans la partie @ de la trame DIN identifie la zone A, B, C, D et les bits de données qui sont associés à cette adresse correspondent aux indications que doivent donner les diodes localisées dans cette zone. Ainsi une première adresse @ est suivie par les valeurs des diodes de la première zone A. Une seconde adresse @ est suivie par les valeurs des diodes de la seconde zone B. Une troisième adresse @ est suivie par les valeurs des diodes de la première zone C. Une quatrième adresse @ est suivie par les valeurs des diodes de la zone D des diodes de service. A titre d'exemple, le bit poids fort correspondra à la diode 15 (de l'une des zones A ou B ou C que définit l'adressage), tandis que le bit poids faible correspondra à la diode 00. Les valeurs des diodes de la zone D se trouvent dans la trame dont l'adresse définit cette zone.

Le circuit 4 de contrôle de visualisation reçoit, par l'intermédiaire de la liaison série S, les bits de données concernant les entrées-sorties, les désérialise et, après traitement, les applique aux diodes par une méthode de multiplexage.

Le circuit 4 de contrôle de visualisation renvoie au processeur numérique-booléen 9 un signal DOUT contenant notamment l'état du bouton-poussoir 5.

Un chien de garde est implémenté dans le circuit 4 pour surveiller la réception régulière des trames envoyées par le processeur numérique-booléen 9. Chaque nouvelle trame le remet à zéro. Dès qu'il ne reçoit plus de trame et après un délai, le chien de garde éteint toutes les diodes.

## Revendications

1. Dispositif de visualisation monté sur la face avant d'un automate équipé de modules ou coupleurs (12) d'entrées-sorties, caractérisé par le fait qu'il est constitué par une matrice (3) de diodes pilotée par un circuit intégré (4) de contrôle de visualisation relié par une liaison série (S) au processeur numérique-booléen (9) de l'automate.

2. Dispositif selon l'une quelconque des revendications précédentes, caractérisé par le fait que la matrice (3) de diodes est subdivisée en plusieurs zones (A, B, C, D) de sous-matrices de diodes pilotées par le circuit de contrôle de visualisation (4) qui reçoit du processeur numérique-booléen (9), via la liaison série (S), une trame composée d'un adressage spécifique à une zone, cet adressage étant associé aux données représentatives des entrées-sorties.

3. Dispositif selon l'une quelconque des revendications précédentes, caractérisé par le fait qu'il comprend au moins un bouton de commande (5) relié à une entrée du circuit (4) de contrôle de visualisation.

4. Dispositif selon l'une quelconque des revendications précédentes, caractérisé par le fait que la matrice (3) de diodes est constituée de plusieurs pavés (31, 32, 33, 34) de matrices de diodes disposés de manière jointive et dont les contours ne correspondent pas à ceux des zones (A, B, C, D).

5. Dispositif selon l'une quelconque des revendications précédentes, caractérisé par le fait qu'il est constitué d'une carte électronique (21) de base portant la matrice de diodes (3) et le circuit intégré (4) et reliée par la liaison série à la carte mère de l'automate, cette carte (21) étant placée derrière une plaque-étiquette (22) en matière plastique portant les numéros des entrées-sorties groupés en zones correspondant aux zones (A, B, C) de la matrice de diodes (3), cette plaque-étiquette (22) étant elle-même placée derrière un capot extérieur de protection (23) en matière plastique transparente.

6. Dispositif selon la revendication 5, caractérisé par le fait que le bouton de commande (5) est monté sur la carte de base (21).

7. Dispositif selon l'une quelconque des revendications précédentes, caractérisé par le fait que le circuit intégré (4) de contrôle de visualisation comporte un chien de garde.

8. Dispositif selon l'une quelconque des revendications précédentes, caractérisé par le fait que la matrice de diodes (3) comporte au moins une ligne ou colonne (36, 37, 38) de diodes qui n'est pas connectée au circuit de contrôle de visualisation (4) et sert à délimiter les zones de diodes (A, B, C) servant à visualiser les états d'entrées-sorties.

## Patentansprüche

1. An der Vorderseite einer mit Eingangs/Ausgangsmodulen oder -kopplern (12) ausgerüsteten programmierbaren Steuerung montierte Anzeigevorrichtung, dadurch gekennzeichnet, dass sie aus einer Diodenmatrix (3) besteht, die von einer integrierten Anzeigekontrollschaltung (4) gesteuert wird, die über eine Serienverbindung (S) am digital-booleschen Prozessor (9) der programmierbaren Steuerung angeschossen ist.

2. Vorrichtung nach einem der vorstehend genannten Ansprüche, dadurch gekennzeichnet, dass die Diodenmatrix in mehrere Zonen (A, B, C, D) von Dioden-Untermatrixen unterteilt ist, die von der Anzeigekontrollschaltung (4) gesteuert werden, die vom digital-booleschen Prozessor (9) über die Serienverbindung (S) einen Raster erhalten, der aus einer spezifischen Adressierung einer Zone besteht, wobei diese Adressierung den für die Eingänge-Ausgänge repräsentativen Daten zugeordnet ist.

3. Vorrichtung nach einem der vorstehend genannten Ansprüche, dadurch gekennzeichnet, dass sie mindestens einen Steuerknopf (5) aufweist, der mit einem Eingang der Anzeigekontrollschaltung (4) verbunden ist.

4. Vorrichtung nach einem der vorstehend genannten Ansprüche, dadurch gekennzeichnet, dass die Diodenmatrix (3) aus mehreren Diodenmatrixfeldern (31, 32, 33, 34) besteht, die angrenzend angeordnet sind, und deren Konturen nicht denjenigen der Zonen (A, B, C, D) entsprechen.

5. Vorrichtung nach einem der vorstehend genannten Ansprüche, dadurch gekennzeichnet, dass sie aus einer Basis-Elektronikkarte (21) besteht, die die Diodenmatrix (3) und die integrierte Schaltung (4) trägt und über die Serienverbindung an der Mutterkarte der programmierbaren Steuerung angeschlossen ist, wobei diese Karte (21) hinter einem Etikettenschild (22) aus Kunststoff angeordnet ist, das die Nummern der Eingänge-Ausgänge trägt, die nach Zonen entsprechend den Zonen (A, B, C) der Diodenmatrix (3) zusammengefasst sind, wobei dieses Etikettenschild (22) seinerseits hinter einer äusseren Schutzhaube (23) aus durchsichtigem Kunststoff angeordnet ist.

6. Vorrichtung nach Anspruch 5, dadurch gekennzeichnet, dass der Steuerknopf (5) auf der Basiskarte (21) angebracht ist.

7. Vorrichtung nach einem der vorstehend genannten Ansprüche, dadurch gekennzeichnet, dass die integrierte Anzeigekontrollschaltung (4) einen watch-dog umfasst.

8. Vorrichtung nach einem der vorstehend genannten Ansprüche, dadurch gekennzeichnet, dass die Diodenmatrix (3) mindestens eine Linie oder Kolonne (36, 37, 38) von Dioden umfasst, die nicht an der Anzeigekontrollschaltung (4) angeschlossen ist und dazu dient, die zur Anzeige der Zustände der Eingänge-Ausgänge dienenden Diodenzonen (A, B, C) abzugrenzen.

## Claims

1. A display apparatus mounted on the front face of a programmable logic controller equipped with input-output modules or couplers (12), characterized in that it is composed of a diode matrix (3) driven by an integrated display control circuit (4) linked by a series connection (S) to the digital-Boolean processor (9) of the programmable logic controller.

2. Apparatus according to any of the previous Claims, characterized in that the diode matrix (3) is divided into several zones (A, B, C, D) of diode submatrices driven by the display control circuit (4), which receives from the digital-Boolean processor (9), via the series connection (S), a frame composed of an address specific to a zone, this address being associated to data which is representative of the inputs-outputs

3. Apparatus according to any of the previous claims, characterized in that it has at least one control button (5) connected to an input of the display control circuit (4).

4. Apparatus according to any of the previous claims, characterized in that the diode matrix (3) is composed of several blocks (31, 32, 33, 34) of diode matrices, situated next to one another and whose contours are not the same as those of the zones (A, B, C, D).

5. Apparatus according to any of the previous Claims, characterized in that it is composed of a base electronic board (21) which holds the diode matrix (3) and the integrated circuit (4) and linked via the series connection to the mother board of the programmable logic controller, this board (21) being situated behind a plastic label plate (22) bearing the numbers of the grouped inputs-outputs in zones which correspond to the zones (A, B C) of the diode matrix (3), this label plate (22) being itself situated behind an external, transparent plastic protective cover (23).

6. Apparatus of claim 5, characterized in that the control button (5) is mounted on the base board (21).

7. Apparatus according to any of the previous Claims, characterized in that the integrated display control circuit (4) has a watchdog fitted.

8. Apparatus according to any of the previous Claims, characterized in that the diode matrix (3) has at least one row or column (36, 37, 38) of diodes which is not connected to the display control circuit (4) and which is used to define the diode zones (A, B C) that display the conditions of the inputs-outputs.
